# EUROPÄISCHE PATENTANMELDUNG

(11) **EP 3 745 000 A1**
(43) Veröffentlichungstag der Anmeldung: **02.12.2020**
(21) Anmeldenummer: 20174369.7
(22) Anmeldetag: 13.05.2020
(51) Int. Cl.: F16H 61/30, F16H 63/30

(54) **ELEKTROMOTORISCHER ANTRIEBSSTRANG EINER FAHRZEUGACHSE**

(30) Priorität: 28.05.2019 DE 102019114290
(71) Anmelder: WABCO Europe BVBA, 1170 Brüssel (BE)
(72) Erfinder: FILTER, Stefan, 30419 Hannover (DE)
(74) Vertreter: Rabe, Dirk-Heinrich

(57) **Zusammenfassung**

Die Erfindung betrifft einen elektromotorischen Antriebsstrang (2) einer Fahrzeugachse (4), welcher für den Quereinbau in einem Fahrzeug ausgebildet ist, und welcher eine als Motor betreibbare Elektromaschine (20), ein Schaltgetriebe (30) sowie eine Schaltvorrichtung (62) zur Schaltbetätigung des Schaltgetriebes (30) aufweist, wobei das Schaltgetriebe (30) zwischen einer Triebwelle (22) der Elektromaschine (20) und einem Achsdifferential (6) der Fahrzeugachse (4) angeordnet ist sowie mindestens zwei mittels einer Schaltmuffe (50) schaltbare Übersetzungsstufen (36, 42) aufweist. Zur bevorzugten Verwendung des Antriebsstrangs (2) in einem schweren Nutzfahrzeug ist die Schaltvorrichtung (62) elektropneumatisch wirksam ausgebildet und weist zur Schaltbetätigung für jede Schaltmuffe (50) des Schaltgetriebes (30) einen doppeltwirksamen Schaltzylinder (64) mit zwei durch einen Kolben (66) getrennten Druckräumen (70, 72), denen jeweils ein Magnetventil (76, 78) zur wechselweisen Belüftung aus einer druckführenden Versorgungsleitung (84) oder Entlüftung zugeordnet ist, sowie zur sensorischen Überwachung einen an eine Versorgungsleitung (84) angeschlossenen Drucksensor (86) und einen Wegsensor (74) an jedem der Schaltzylinder (64) auf. Wesentliche Komponenten des Antriebsstrangs (2) sind bevorzugt zu einem Modul zusammengefasst.

## Beschreibung

Die Erfindung betrifft einen elektromotorischen Antriebsstrang einer Fahrzeugachse, welcher für den Quereinbau in einem Fahrzeug ausgebildet ist, und welcher eine als Motor betreibbare Elektromaschine, ein Schaltgetriebe sowie eine Schaltvorrichtung zur Schaltbetätigung des Schaltgetriebes aufweist, wobei das Schaltgetriebe zwischen einer Triebwelle der Elektromaschine und einem Achsdifferential der Fahrzeugachse angeordnet ist sowie mindestens zwei mittels einer Schaltmuffe schaltbare Übersetzungsstufen aufweist.

Elektrofahrzeuge wie auch Hybridfahrzeuge können mit einer elektromotorisch antreibbaren Fahrzeugachse versehen sein, deren zugeordneter Antriebsstrang platzsparend nahe dieser Fahrzeugachse quer in dem Fahrzeug eingebaut ist. Ein derartiger Antriebsstrang weist eine als Motor betreibbare Elektromaschine und ein Untersetzungsgetriebe auf, welches zwischen der Triebwelle der Elektromaschine und dem Achsdifferential der Fahrzeugachse, genauer gesagt dem Differentialkorb des Achsdifferentials angeordnet ist. Um die Elektromaschine im Fahrbetrieb weitgehend in einem Drehzahlbereich mit hohem Wirkungsgrad betreiben zu können, ist das Untersetzungsgetriebe zweckmäßig als ein Schaltgetriebe ausgebildet, das mindestens zwei schaltbare Übersetzungsstufen aufweist.

Aus der DE 199 17 724 C2 ist ein derartiger elektromotorischer Antriebsstrang mit einer Elektromaschine und einem in Vorgelegebauweise ausgeführten, zweistufig schaltbaren Schaltgetriebe bekannt. Die Elektromaschine ist koaxial über einer der Antriebswellen der Fahrzeugachse angeordnet. Die Triebwelle der Elektromaschine steht über eine aus einem Zahnradpaar gebildete Eingangskonstante mit einer Vorgelegewelle in Triebverbindung. Das Zahnradpaar der Eingangskonstante umfasst ein drehfest mit der Triebwelle der Elektromaschine verbundenes erstes Festrad und ein drehfest mit der Vorgelegewelle verbundenes zweites Festrad. Die Vorgelegewelle ist über zwei schaltbare Zahnradpaare mit unterschiedlichen Übersetzungen mit dem Differentialkorb des Achsdifferentials verbindbar. Die schaltbaren Zahnradpaare umfassen jeweils ein auf der Vorgelegewelle drehbar gelagertes und über eine zugeordnete Schaltkupplung drehfest mit dieser verbindbares Losrad sowie ein an dem Differentialkorb des Achsdifferentials drehfest befestigtes Festrad. Die Schaltkupplungen sind bevorzugt als nasslaufende Lamellenkupplungen ausgebildet. Durch die Möglichkeit eines zeitlich überschnittenen Öffnens der einen Schaltkupplung und Schließens der anderen Schaltkupplung ist das Schaltgetriebe lastschaltbar.

In der DE 10 2010 024 599 A1 ist ein ähnlicher elektromotorischer Antriebsstrang mit einer Elektromaschine und einem ebenfalls in Vorgelegebauweise ausgeführten, zweistufig schaltbaren Schaltgetriebe beschrieben. Die Elektromaschine ist auch hier koaxial über einer der Antriebswellen der Fahrzeugachse angeordnet. Die Triebwelle der Elektromaschine ist über ein erstes schaltbares Zahnradpaar mit einer ersten Vorgelegewelle und über ein zweites schaltbares Zahnradpaar mit einer zweiten Vorgelegewelle des Schaltgetriebes verbindbar.

Aus der DE 10 2010 061 217 A1 ist ein entsprechender elektromotorischer Antriebsstrang mit einer Elektromaschine und einem in Planetenbauweise ausgeführten, zweistufig schaltbaren Schaltgetriebe bekannt, der aus einem für den Längseinbau in einem Fahrzeug vorgesehenen Antriebsstrang abgeleitet wurde. Die Elektromaschine ist dabei achsparallel vor oder hinter einer der Antriebswellen der Fahrzeugachse angeordnet.

Die bekannten für einen Quereinbau in einem Fahrzeug vorgesehenen elektromotorischen Antriebsstränge einer Fahrzeugachse sind jeweils für den Einsatz in einem Pkw ausgelegt. Die Schaltung der Schaltgetriebe erfolgt dort wahlweise elektromotorisch, elektromagnetisch oder hydraulisch. Bei schweren Nutzfahrzeugen, wie Lastkraftwagen und Bussen, wäre eine elektromotorische oder elektromagnetische Schaltvorrichtung aufgrund der hohen Schaltkräfte mit einem hohen Stromverbrauch verbunden. Für eine hydraulische Schaltbetätigung wäre eine separate hydraulische Druckversorgungseinrichtung mit einer von der Elektromaschine antreibbaren Ölpumpe erforderlich. Zudem sind elektromotorische Antriebsstränge häufig aus mehreren Komponenten verschiedener Hersteller zusammengesetzt, wodurch deren Abmessungen relativ groß sind.

Der Erfindung lag daher die Aufgabe zugrunde, einen elektromotorischen Antriebsstrang einer Fahrzeugachse der eingangs genannten Bauart vorzustellen, der besonders für den Einsatz in schweren Nutzfahrzeugen geeignet ist sowie kompakte Abmessungen aufweist.

Diese Aufgabe wird mit einem Antriebsstrang gelöst, welcher die Merkmale des Anspruchs 1 aufweist. Vorteilhafte Weiterbildungen dieses Antriebsstrangs sind in den abhängigen Ansprüchen definiert.

Demnach betrifft die Erfindung einen elektromotorischen Antriebsstrang einer Fahrzeugachse, welcher für den Quereinbau in einem Fahrzeug ausgebildet ist, und welcher eine als Motor betreibbare Elektromaschine, ein Schaltgetriebe sowie eine Schaltvorrichtung zur Schaltbetätigung des Schaltgetriebes aufweist, wobei das Schaltgetriebe zwischen einer Triebwelle der Elektromaschine und einem Achsdifferential der Fahrzeugachse angeordnet ist sowie mindestens zwei mittels einer Schaltmuffe schaltbare Übersetzungsstufen aufweist.

Zur Lösung der gestellten Aufgabe ist bei diesem Antriebsstrang zusätzlich vorgesehen, dass die Schaltvorrichtung elektropneumatisch wirksam ausgebildet ist und zur Schaltbetätigung für jede Schaltmuffe des Schaltgetriebes einen doppeltwirksamen Schaltzylinder mit zwei durch einen Kolben getrennten Druckräumen aufweist, dass den Druckräumen jeweils ein Magnetventil zur wechselweisen Belüftung aus einer druckführenden Versorgungsleitung oder zur Entlüftung zugeordnet ist, und dass die Schaltvorrichtung zur sensorischen Überwachung einen an die Versorgungsleitung angeschlossenen Drucksensor sowie zur Messung der Position dessen Kolbens an jedem der Schaltzylinder einen Wegsensor aufweist

Die Verwendung einer elektropneumatisch wirksamen Schaltvorrichtung der genannten Bauart ist besonders vorteilhaft, weil schwere Nutzfahrzeuge zur Druckluftversorgung einer Druckluftbremsanlage und/oder einer Luftfederungsanlage üblicherweise schon über eine Druckluftversorgungsanlage verfügen. Somit werden ein hoher Stromverbrauch durch elektromotorische oder elektromagnetische Schaltaktuatoren oder eine Hydraulikpumpe und ein Hydraulikdruckspeicher zur Versorgung hydraulischer Schaltaktuatoren vermieden. Durch den Drucksensor und den Wegsensor pro Schaltzylinder ist eine sensorische Überwachung der Schaltvorrichtung realisiert, welche eine autonome Steuerung der Schaltungsabläufe ermöglicht.

Gemäß einer vorteilhaften Weiterbildung dieser Schaltvorrichtung ist vorgesehen, dass der Schaltvorrichtung eine elektronische Getriebesteuereinheit zugeordnet ist, welche über elektrische Sensorleitungen mit den Sensoren sowie über elektrische Steuerleitungen mit den Magnetventilen verbunden ist, und welche über Datenleitungen mit einer übergeordneten Steuereinheit und/oder mit einem Datenbus verbunden ist, wobei die Getriebesteuereinheit derart ausgebildet ist, dass Schaltungsanforderungen empfangen, die jeweilige Schaltung ausgelöst, gesteuert und überwacht werden, und dass nach Abschluss eines Schaltvorgangs oder nach Ablauf einer vorgegebenen Schaltzeit entweder eine Meldung über die erfolgreiche Durchführung der Schaltung oder über eine Störung ausgegeben wird. Die Steuerung der Schaltungsabläufe mittels der Schaltvorrichtung innerhalb des Schaltgetriebes erfolgt somit autonom über die Getriebesteuereinheit, wodurch die Integration und die Adaption der Schaltvorrichtung in das jeweilige Schaltgetriebe deutlich vereinfacht sind.

Ein Steuerprogramm, mit dem über den Datenbus empfangene Betriebsparameter ausgewertet und Schaltungsanforderungen an die Getriebesteuereinheit ausgegeben werden, ist bevorzugt in einem Programmspeicher der übergeordneten Steuereinheit abgespeichert und wird in der übergeordneten Steuereinheit ausgeführt.

Möglich ist es aber auch, dass das betreffende Steuerprogramm in einem Programmspeicher der Getriebesteuereinheit abgespeichert ist und in der Getriebesteuereinheit ausgeführt wird. In diesem Fall erfolgen neben der Steuerung der Schaltungsabläufe auch die Auswertung von Betriebsparametern und die Anforderung von Schaltungen in der Getriebesteuereinheit.

Um den Montageaufwand und die Abmessungen gering zu halten, sind die Schaltvorrichtung und die Getriebesteuereinheit gemäß einer anderen Weiterbildung der Erfindung in einem Schaltmodul zusammengefasst. Ein derartiges Schaltmodul kann in mehr oder minder unterschiedlichen Fahrzeugtypen oder Fahrzeugvarianten verwendet werden sowie von mehreren Fahrzeugherstellern bei einem Fahrzeugzulieferer bezogen werden. Der jeweilige Fahrzeughersteller hat mit dem Schaltmodul keinen Aufwand hinsichtlich der Adaption der Schaltsteuerung des Schaltgetriebes mehr, da diese in der Getriebesteuereinheit des Schaltmoduls enthalten ist.

Gemäß einem weiteren Integrationsschritt können das Schaltgetriebe, die Schaltvorrichtung und die Getriebesteuereinheit in einem Getriebemodul baulich zusammengefasst sein. Auch ein derartiges Getriebemodul kann in unterschiedlichen Fahrzeugtypen oder Fahrzeugvarianten verwendet und von mehreren Fahrzeugherstellern bei einem Fahrzeugzulieferer bezogen werden. Der jeweilige Fahrzeughersteller hat auch in diesem Fall keinen Aufwand hinsichtlich der Adaption der Schaltsteuerung des Schaltgetriebes, da diese in der Getriebesteuereinheit des Getriebemoduls enthalten ist.

Die Erfindung wird nachstehend anhand eines in der beigefügten Zeichnung dargestellten Ausführungsbeispiels näher erläutert. In der Zeichnung zeigt
Fig. 1 einen elektromotorischen Antriebsstrang einer Fahrzeugachse in einer schematischen Ansicht,
Fig. 2 eine erste Weiterbildung des Antriebsstrangs gemäß Fig. 1 in einer schematischen Ansicht, und
Fig. 3 eine zweite Weiterbildung des Antriebsstrangs gemäß Fig. 1 in einer schematischen Ansicht.

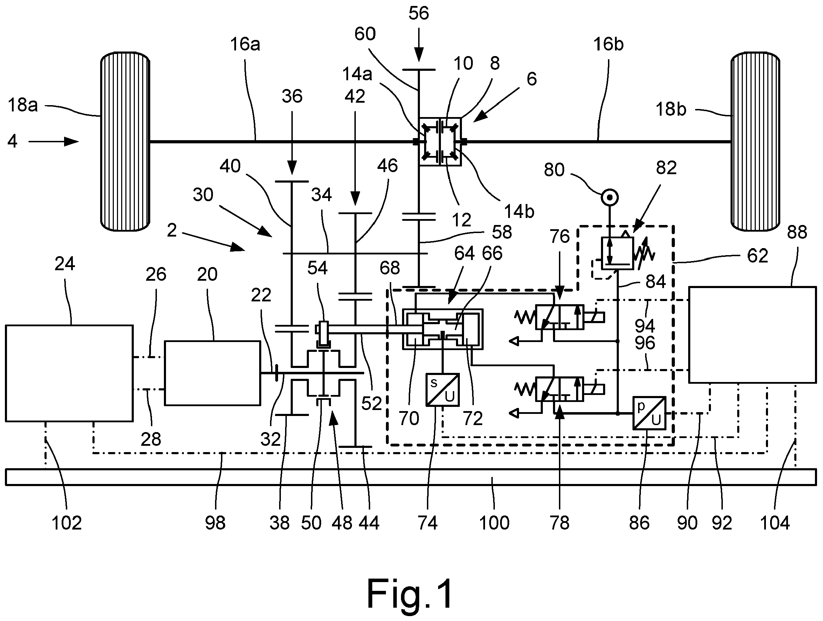

Ein in Fig. 1 schematisch dargestellter elektromotorischer Antriebsstrang 2 einer Fahrzeugachse 4, der für einen Quereinbau in einem Fahrzeug vorgesehen ist, umfasst eine als Motor betreibbare Elektromaschine 20, ein Schaltgetriebe 30 sowie eine Schaltvorrichtung 62 zur Schaltbetätigung des Schaltgetriebes 30. Das Schaltgetriebe 30 ist zwischen einer Triebwelle 22 der Elektromaschine 20 sowie einem Achsdifferential 6 der Fahrzeugachse 4 angeordnet und weist zwei mittels einer Schaltmuffe 50 schaltbare Übersetzungsstufen 36, 42 auf.

Der Elektromaschine 20 ist eine elektronische Motorsteuereinheit 24 zugeordnet, die über mindestens eine elektrische Sensorleitung 26 und eine elektrische Steuerleitung 28 mit der Elektromaschine 20 verbunden ist. Über die Sensorleitung 26 kann zum Beispiel die Motordrehzahl und/oder der Wert der Motorlast der Elektromaschine 20 in die Motorsteuereinheit 24 übertragen werden. Über die Steuerleitung 28 wird die Elektromaschine 20 zur Einstellung einer bestimmten Motordrehzahl und/oder eines bestimmten Motordrehmomentes von der Motorsteuereinheit 24 entsprechend angesteuert.

Das Schaltgetriebe 30 ist in Vorgelegebauweise ausgeführt und weist eine Eingangswelle 32 sowie eine achsparallel zu dieser angeordnete Ausgangswelle 34 auf. Die Eingangswelle 32 ist drehfest mit der Triebwelle 22 der Elektromaschine 20 verbunden sowie über die zwei schaltbaren Übersetzungsstufen 36, 42 mit unterschiedlichen Übersetzungen mit der Ausgangswelle 34 verbindbar. Die erste Übersetzungsstufe 36 weist eine höhere Übersetzung auf und ist durch ein erstes Zahnradpaar gebildet, das ein drehbar auf der Eingangswelle 32 gelagertes und über eine erste Schaltkupplung mit dieser verbindbares Losrad 38 sowie ein drehfest an der Ausgangswelle 34 angeordnetes Festrad 40 umfasst. Die zweite Übersetzungsstufe 42 weist eine niedrigere Übersetzung auf und ist durch ein zweites Zahnradpaar gebildet, welches ein drehbar auf der Eingangswelle 32 gelagertes und mittels einer zweiten Schaltkupplung mit dieser verbindbares Losrad 44 sowie ein drehfest auf der Ausgangswelle 34 angeordnetes Festrad 46 umfasst.

Die beiden Schaltkupplungen sind als reibsynchronisierte oder unsynchronisierte Klauenkupplungen ausgebildet, in einem Schaltpaket 48 zusammengefasst sowie in bekannter Weise mittels einer Schaltmuffe 50 betätigbar, also einrückbar und ausrückbar. In die Schaltmuffe 50 greift eine Schaltgabel 54 ein, welche am freien Ende einer axial verschiebbaren Schaltstange 52 befestigt ist. Die Ausgangswelle 34 steht über eine durch ein Zahnradpaar gebildete Ausgangskonstante 56 mit dem Achsdifferential 6 der Fahrzeugachse 4 in Triebverbindung. Die Ausgangskonstante 56 umfasst ein drehfest auf der Ausgangswelle 34 angeordnetes Festrad 58 sowie ein drehfest an dem Differentialkorb 8 des Achsdifferentials 6 befestigtes Losrad 60.

Durch die Bauweise des Schaltgetriebes 30 als Vorgelegegetriebe sind große Übersetzungen der schaltbaren Übersetzungsstufen 36, 42 und der Ausgangskonstante 56 in Verbindung mit hohen übertragbaren Drehmomenten möglich. Zudem sind die axialen und radialen Abmessungen des Schaltgetriebes 30 relativ klein, da die Getriebewellen 32, 34 und die benachbarten Antriebswellen 16a, 16b der Fahrzeugachse 4 bevorzugt nicht wie in Fig. 1 vereinfacht dargestellt in einer Ebene liegen, sondern in der Axialansicht V-förmig angeordnet sind.

Die Schaltvorrichtung 62 ist elektropneumatisch wirksam ausgebildet und weist zur Schaltbetätigung der Schaltmuffe 50 des Schaltgetriebes 30 einen doppeltwirksamen Schaltzylinder 64 mit zwei durch einen Kolben 66 getrennten Druckräumen 70, 72 auf. Eine an dem Kolben 66 des Schaltzylinders 64 befestigte Kolbenstange 68 ist zumindest axialfest mit der Schaltstange 52 des Schaltgetriebes 30 verbunden oder einstückig mit dieser ausgeführt. Den beiden Druckräumen 70, 72 des Schaltzylinders 64 ist jeweils ein als 3/2-Wege-Magnetschaltventil ausgebildetes Magnetventil 76, 78 zugeordnet, über welche die Druckräume 70, 72 wechselweise mit einer druckführenden Versorgungsleitung 84 verbunden oder entlüftet werden können. Die Versorgungsleitung 84 ist über ein Druckbegrenzungsventil 82 an eine Druckluftquelle 80 angeschlossen. Zur sensorischen Überwachung weist die Schaltvorrichtung 62 einen an die Versorgungsleitung 84 angeschlossenen Drucksensor 86 sowie einen an dem Schaltzylinder 64 angeordneten Wegsensor 74 auf. Der Drucksensor 86 ist als ein Druck-Spannungs-Sensor [p/U] und der Wegsensor 74 ist als ein Weg-Spannungs-Sensor [s/U] ausgebildet.

Da schwere Nutzfahrzeuge üblicherweise zum Beispiel zur Druckluftversorgung einer Druckluftbremsanlage und/oder einer Luftfederungsanlage schon über eine Druckluftversorgungsanlage verfügen, ist die Verwendung einer elektropneumatisch wirksamen Schaltvorrichtung 62 der beschriebenen Bauart besonders vorteilhaft. Durch die sensorische Erfassung des in der Versorgungsleitung 84 vorliegenden Versorgungsdruckes mittels des Drucksensors 86 und der aktuellen Schaltposition des Kolbens 66 innerhalb des Schaltzylinders 64 mittels des Wegsensors 74 ist zudem eine autonome Steuerung der Schaltungsabläufe möglich.

Der Schaltvorrichtung 64 ist eine elektronische Getriebesteuereinheit 88 zugeordnet, die über elektrische Sensorleitungen 90, 92 mit den Sensoren 74, 86 und über elektrische Steuerleitungen 94, 96 mit den Magnetventilen 76, 78 verbunden ist. Die Getriebesteuereinheit 88 ist über Datenleitungen 98, 104 mit der Motorsteuereinheit 24 und einem zum Beispiel als CAN-Bus ausgeführten Datenbus 100 verbunden, an den auch die Motorsteuereinheit 24 der Elektromaschine 20 über eine Datenleitung 102 angeschlossen ist. Über die erwähnte Datenleitung 98 oder den Datenbus 100 können die Motorsteuereinheit 24 und die Getriebesteuereinheit 88 die Werte der Betriebsparameter der Elektromaschine 20 sowie der Schaltvorrichtung 62 austauschen. Über den Datenbus 100 können die Motorsteuereinheit 24 und die Getriebesteuereinheit 88 jedoch auch extern erfasste Betriebsparameter, wie zum Beispiel die aktuelle Fahrgeschwindigkeit und die Leistungsanforderung des Fahrers, erfassen und beispielsweise in eine Schaltungsanforderung an die Getriebesteuereinheit 88 umsetzen. Eine entsprechende Umschaltung des Schaltgetriebes 30 wird durch die Getriebesteuereinheit 88 ausgelöst, gesteuert und überwacht. Nach Abschluss eines Schaltvorgangs oder nach Ablauf einer vorgegebenen Schaltzeit wird entweder eine Meldung über die erfolgreiche Durchführung der Schaltung oder über eine Störung ausgegeben.

Ein Steuerprogramm, mit dem über den Datenbus 100 empfangene Betriebsparameter ausgewertet und Schaltungsanforderungen an die Getriebesteuereinheit 88 ausgegeben werden, kann wahlweise in einem Datenspeicher der Motorsteuereinheit 24 oder in einem Datenspeicher der Getriebesteuereinheit 88 abgespeichert sein und in der betreffenden Steuereinheit 24, 88 ausgeführt werden.

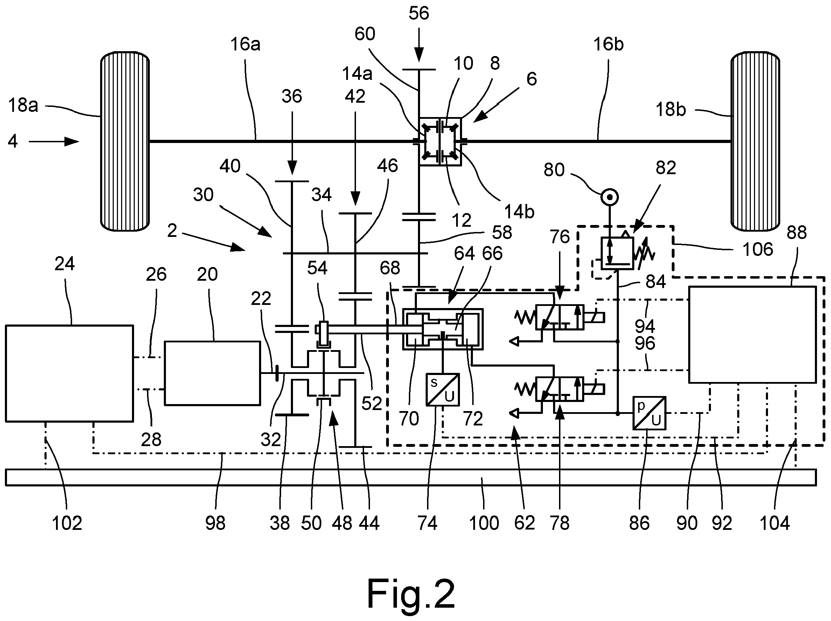

In der schematischen Abbildung gemäß Fig. 2 ist eine erste Weiterbildung des Antriebsstrangs 2 gemäß Fig. 1 dargestellt. Hierbei sind die elektropneumatische Schaltvorrichtung 62 und die Getriebesteuereinheit 88 in einem Schaltmodul 106 zusammengefasst, welches in unterschiedlichen Fahrzeugtypen oder Fahrzeugvarianten verwendet und von mehreren Fahrzeugherstellern bei einem Fahrzeugzulieferer bezogen werden kann. Der jeweilige Fahrzeughersteller hat dabei keinen Aufwand für die Adaption der Schaltsteuerung des Schaltgetriebes 30, da diese in der Getriebesteuereinheit 88 des Schaltmoduls 106 enthalten ist.

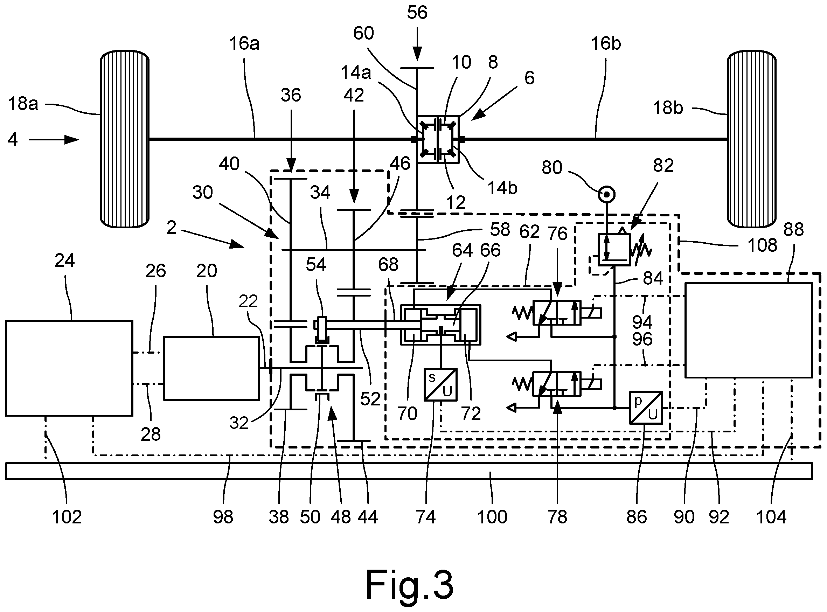

In einer in der schematischen Abbildung der Fig. 3 dargestellten zweiten Weiterbildung des Antriebsstrangs 2 gemäß Fig. 1 sind das Schaltgetriebe 30, die elektropneumatische Schaltvorrichtung 62 und die Getriebesteuereinheit 88 in einem Getriebemodul 108 zusammengefasst, welches in unterschiedlichen Fahrzeugtypen oder Fahrzeugvarianten verwendet und von mehreren Fahrzeugherstellern bei einem Fahrzeugzulieferer bezogen werden kann. Der jeweilige Fahrzeughersteller hat keinen Aufwand für die Adaption der Schaltsteuerung des Schaltgetriebes 30, da diese in der Getriebesteuereinheit 88 des Getriebemoduls 108 enthalten ist.

Die ausgangsseitige Schnittstelle des Schaltgetriebes 30 mit dem Achsdifferential 6 der Fahrzeugachse 4 ist vorliegend beispielhaft zwischen den Festrädern 58, 60 der Ausgangskonstante 56 dargestellt. Das Schaltgetriebe 30 und das Getriebemodul 108 können jedoch auch das differentialseitige Festrad 60 der Ausgangskonstante 56 oder sogar das gesamte Differentialgetriebe 6 umfassen.

### Bezugszeichenliste (Teil der Beschreibung)

- 2: Antriebsstrang
- 4: Fahrzeugachse
- 6: Achsdifferential
- 8: Differentialkorb
- 10: Ausgleichsrad
- 12: Ausgleichsrad
- 14a, 14b: Abtriebsrad
- 16a, 16b: Antriebswelle
- 18a, 18b: Fahrzeugrad
- 20: Elektromaschine
- 22: Triebwelle
- 24: Motorsteuereinheit
- 26: Sensorleitung
- 28: Steuerleitung
- 30: Schaltgetriebe
- 32: Eingangswelle
- 34: Ausgangswelle
- 36: Erste Übersetzungsstufe, Zahnradpaar
- 38: Losrad
- 40: Festrad
- 42: Zweite Übersetzungsstufe, Zahnradpaar
- 44: Losrad
- 46: Festrad
- 48: Schaltpaket
- 50: Schaltmuffe
- 52: Schaltstange
- 54: Schaltgabel
- 56: Ausgangskonstante, Zahnradpaar
- 58: Festrad
- 60: Festrad
- 62: Schaltvorrichtung
- 64: Schaltzylinder
- 66: Kolben
- 68: Kolbenstange
- 70: Erster Druckraum
- 72: Zweiter Druckraum
- 74: Wegsensor
- 76: Erstes Magnetventil, 3/2-Wege-Magnetschaltventil
- 78: Zweites Magnetventil, 3/2-Wege-Magnetschaltventil
- 80: Druckluftquelle
- 82: Druckbegrenzungsventil
- 84: Versorgungsleitung
- 86: Drucksensor
- 88: Getriebesteuereinheit
- 90: Sensorleitung
- 92: Sensorleitung
- 94: Steuerleitung
- 96: Steuerleitung
- 98: Datenleitung
- 100: Datenbus, CAN-Bus
- 102: Datenleitung
- 104: Datenleitung
- 106: Schaltmodul
- 108: Getriebemodul

## Patentansprüche

1. Elektromotorischer Antriebsstrang (2) einer Fahrzeugachse (4), welcher für den Quereinbau in einem Fahrzeug ausgebildet ist, und welcher eine als Motor betreibbare Elektromaschine (20), ein Schaltgetriebe (30) sowie eine Schaltvorrichtung (62) zur Schaltbetätigung des Schaltgetriebes (30) aufweist, wobei das Schaltgetriebe (30) zwischen einer Triebwelle (22) der Elektromaschine (20) und einem Achsdifferential (6) der Fahrzeugachse (4) angeordnet ist sowie mindestens zwei mittels einer Schaltmuffe (50) schaltbare Übersetzungsstufen (36, 42) aufweist, **dadurch gekennzeichnet, dass** die Schaltvorrichtung (62) elektropneumatisch wirksam ausgebildet ist und zur Schaltbetätigung für jede Schaltmuffe (50) des Schaltgetriebes (30) einen doppeltwirksamen Schaltzylinder (64) mit zwei durch einen Kolben (66) getrennten Druckräumen (70, 72) aufweist, dass den Druckräumen (70, 72) jeweils ein Magnetventil (76, 78) zur wechselweisen Belüftung aus einer druckführenden Versorgungsleitung (84) oder zur Entlüftung zugeordnet ist, und dass die Schaltvorrichtung (62) zur sensorischen Überwachung einen an die Versorgungsleitung (84) angeschlossenen Drucksensor (86) sowie zur Messung der Position dessen Kolbens (66) an jedem der Schaltzylinder (64) einen Wegsensor (74) aufweist.

2. Antriebsstrang nach Anspruch 1, **dadurch gekennzeichnet, dass** der Schaltvorrichtung (62) eine elektronische Getriebesteuereinheit (88) zugeordnet ist, welche über elektrische Sensorleitungen (90, 92) mit den Sensoren (74, 86) sowie über elektrische Steuerleitungen (94, 96) mit den Magnetventilen (76, 78) verbunden ist, und welche über Datenleitungen (98, 104) mit einer übergeordneten Steuereinheit (24) und/oder mit einem Datenbus (100) verbunden ist, wobei die Getriebesteuereinheit (88) derart ausgebildet ist, dass Schaltungsanforderungen empfangen, die jeweilige Schaltung ausgelöst, gesteuert und überwacht werden, und dass nach Abschluss eines Schaltvorgangs oder nach Ablauf einer vorgegebenen Schaltzeit entweder eine Meldung über die erfolgreiche Durchführung der Schaltung oder über eine Störung ausgegeben wird.

3. Antriebsstrang nach Anspruch 2, **dadurch gekennzeichnet, dass** ein Steuerprogramm, mit dem über den Datenbus (100) empfangene Betriebsparameter ausgewertet und Schaltungsanforderungen an die Getriebesteuereinheit (88) ausgegeben werden, in einem Programmspeicher der übergeordneten Steuereinheit (24) abgespeichert ist und in der übergeordneten Steuereinheit (24) ausgeführt wird.

4. Antriebsstrang nach Anspruch 2, **dadurch gekennzeichnet, dass** ein Steuerprogramm, mit dem über den Datenbus (100) empfangene Betriebsparameter ausgewertet und Schaltungsanforderungen an die Getriebesteuereinheit (88) ausgegeben werden, in einem Programmspeicher der Getriebesteuereinheit (88) abgespeichert ist und in der Getriebesteuereinheit (88) ausgeführt wird.

5. Antriebsstrang nach einem der Ansprüche 1 bis 4, **dadurch gekennzeichnet, dass** die Schaltvorrichtung (62) und die Getriebesteuereinheit (88) in einem Schaltmodul (106) zusammengefasst sind.

6. Antriebsstrang nach einem der Ansprüche 1 bis 4, **dadurch gekennzeichnet, dass** das Schaltgetriebe (30), die Schaltvorrichtung (62) und die Getriebesteuereinheit (88) in einem Getriebemodul (108) zusammengefasst sind.
